# DEMANDE DE BREVET EUROPEEN

(11) **EP 1 296 503 A2**
(43) Date de publication de la demande: **26.03.2003**
(21) Numéro de dépôt: 02292023.5
(22) Date de dépôt: 12.08.2002
(51) Int. Cl.: H04M 7/00, H04L 12/66, H04L 29/06

(54) **Passerelle de voix-sur-IP**

(30) Priorité: 13.09.2001 FR 0111852
(71) Demandeur: ALCATEL, 75008 Paris (FR)
(72) Inventeur: Pinault, Francis, 92270 Bois-Colombes (FR)
(74) Mandataire: Sciaux, Edmond

(57) **Abrégé**

La présente invention concerne le domaine des télécommunications. Plus précisément, elle se rapporte à une passerelle inter-réseaux de transmission (100) de signaux numériques (S_{N1}), l'un des réseaux étant un réseau privé de télécommunication (RP) offrant un service de radiotéléphonie mobile GSM utilisant un protocole de transmission numérique GSM, l'autre réseau étant le réseau Internet. Cette passerelle inter-réseaux (100) permet d'établir une communication entre un premier terminal radiotéléphonique (G1) de type GSM, ou UMTS, ou PCS, ou Bluetooth, connecté à un réseau de télécommunication privé (RP), et un autre terminal (GIP, OIP, FIP) appartenant à un autre réseau, cet autre terminal étant adressable par une adresse Internet et étant adapté pour émettre et recevoir des informations de type voix selon le protocole RTP/IP, et/ou pour émettre et recevoir des informations de type données selon le protocole UDP/IP ou le protocole TCP/IP. Elle comporte des moyens (MT) de transcodage d'informations, du protocole de transmission numérique utilisé dans le premier terminal, vers le protocole utilisé dans le second terminal, et vice versa.

## Description

La présente invention concerne le domaine des télécommunications. Elle se rapporte à une passerelle permettant de réduire le coût d'utilisation de terminaux radio téléphoniques portables, notamment de type GSM (Global System for Mobile communications), connectés à un réseau privé, pour des communications avec d'autres terminaux situés à l'extérieur de ce réseau privé. Plus précisément, elle s'applique dans le cas où un autre terminal est adressable par une adresse Internet, et est adapté pour émettre et recevoir des informations de type voix selon le protocole RTP/IP, et/ou pour émettre et recevoir des informations de type données selon le protocole UDP/IP ou le protocole TCP/IP. Cet autre terminal peut être un terminal téléphonique filaire ou GSM classique, si une adaptation est réalisée par une passerelle située dans le réseau Internet, cette passerelle de type connu permettant d'adresser ce terminal au moyen d'une adresse Internet et permettant de réaliser un changement de format des signaux de voix.

Il existe des réseaux de télécommunication privés destinés à une entreprise ou à un groupe d'entreprises. Leurs services sont destinés à leurs employés et à des visiteurs dûment déclarés, ou sont loués à des abonnés, et sont circonscrits à une zone. Le document **EP 1 073 294** décrit un réseau privé fournissant un service de radiotéléphonie GSM. Il comprend des stations de base GSM, un dispositif équivalent à un contrôleur de stations de base GSM, et un dispositif de contrôle d'accès. Ce réseau privé comporte en outre un réseau local informatique utilisant le protocole Internet. Une passerelle fait l'interface entre ce réseau local Internet et un réseau publique de radiotéléphonie GSM, en utilisant le protocole Internet comme protocole de transport. Les signaux de voix/données émis ou reçus par les terminaux GSM de ce réseau privé sont transportés par le réseau local et par cette passerelle en conservant leur format d'origine qui est défini par l'interface dite A dans la norme GSM. Les codeurs de voix employés dans le protocole GSM sont le codeur EFR (Enhanced Full speech Rate) ou l'AMR (Adaptative Multi-Rate) définis par l'ITU (International Telecommunication Union). Les caractéristiques des communications supportées par le réseau de radiotéléphonie sont conservés. Il n'y a pas de transcodage des éléments d'information transportés, puisque les terminaux radio téléphoniques correspondants dans le réseau public sont des terminaux GSM, comme les terminaux radio téléphoniques du réseau privé considéré.

Les caractéristiques des éléments d'information décrits dans les normes définissant le protocole Internet IP sont conçues principalement pour établir des communications entre deux points du réseau en mode connecté, en mode non connecté ou encore dans un mode qui garantit un délai d'acheminement et qui utilise paquets dits RTP (Real Time Protocol). On utilise des paquets RTP pour acheminer des signaux de voix/données GSM, à cause des contraintes de délais de transmission de la voix.

Grâce à cette passerelle, les usagers de terminaux GSM de ce réseau privé peuvent appeler des terminaux du réseau publique de radiotéléphonie GSM, mais le coût d'une communication avec ce réseau publique est beaucoup plus élevé que le coût d'une communication avec un terminal appartenant lui aussi au réseau privé.

Certains réseaux privés de télécommunication de type RPIS (Réseau Privé à Intégration de Services) offrent un service de radiotéléphonie de proximité de type DECT (Digital European Cordeless Telecommunications en anglais) pour les communications locales et offrent un service de radiotéléphonie de type GSM, ou PCS (Personal Communication System), ou UMTS (Universal Mobile Telecommunication System) pour les communications nationales et internationales. Il est connu qu'une partie d'un réseau de communication de type GSM puisse être raccordé à une réseau de type RPIS pour offrir une possibilité d'acheminement de certaines communications à l'intérieur du réseau RPIS. Par exemple, la demande de brevet **FR-2790175** décrit un serveur permettant d'utiliser des terminaux radio téléphoniques mobiles GSM dans un réseau de télécommunication privé fonctionnant selon la norme DECT. Ces services de radiotéléphonie véhiculent des signaux numériques en utilisant chacun un protocole de transmission numérique spécifique. Les signaux de voix/données émis ou reçus par les terminaux GSM de ce réseau privé sont transcodés par un serveur pour permettre aux terminaux GSM de bénéficier des services d'un autocommutateur qui n'est adapté que pour communiquer avec des stations de base DECT, ou des poste téléphoniques filaires.

Dans le cas d'une communication entre un terminal GSM du réseau privé et un terminal quelconque n'appartenant pas à ce réseau privé, lors d'une communication nationale ou internationale, ces systèmes connus orientent automatiquement la communication vers le réseau public mobile si le terminal appelé est mobile, ou vers le réseau public fixe si le terminal appelé est fixe. Ces systèmes connus ne sont donc pas capables d'assurer l'émission ou la réception d'appels, pour des communications nationales ou internationales à partir ou à destination de terminaux mobiles connectés à un réseau privé, indépendamment d'un réseau public de téléphonie. Or les redevances attachées à la location de réseaux publics, et payées par l'opérateur du réseau privé coûtent cher, en particulier les redevances de location de réseaux à l'étranger.

La présente invention propose un dispositif permettant des communications nationales ou internationales entre un terminal radiotéléphonique connecté à un réseau privé et un autre terminal, quelconque, n'appartenant pas à ce réseau privé, indépendamment d'un réseau public de téléphonie.

L'Objet de l'invention est une passerelle inter-réseaux permettant d'établir une communication entre un premier terminal radiotéléphonique de type GSM, ou UMTS, ou PCS, ou Bluetooth, connecté à un réseau de télécommunication privé, et un autre terminal appartenant à un autre réseau, cet autre terminal étant adressable par une adresse Internet et étant adapté pour émettre et recevoir des informations de type voix selon le protocole RTP/IP, et/ou pour émettre et recevoir des informations de type données selon le protocole UDP/IP ou le protocole TCP/IP ;
**caractérisée** en ce qu'elle comporte des moyens de transcodage d'informations, du protocole de transmission numérique utilisé dans le premier terminal, vers le protocole utilisé dans le second terminal, et vice versa.

La redevance liée à la location du réseau public Internet est jusqu'à dix fois inférieure à la redevance payée par l'opérateur du réseau privé pour accéder aux réseaux de radiotéléphonie à l'étranger. La passerelle selon l'invention réduit donc le coût des appels internationaux. Il en est de même pour les appels nationaux.

A titre d'exemple, un réseau privé fixe tel que celui d'un hôtel ou embarqué tel que celui d'un bateau, d'une plate forme pétrolière, ou d'un avion peut proposer aux clients ou aux résidents un service de radiotéléphonie international avantageux grâce à la passerelle selon l'invention. De même, un réseau privé d'entreprise peut utiliser une passerelle selon l'invention pour diminuer le coût engendré par les appels nationaux et internationaux de ses employés, et /ou de ses visiteurs dûment inscrits, qui utilisent des terminaux mobiles GSM ou UMTS reliés à ce réseau privé.

Un signal numérique du réseau privé ou de type Internet comprend des informations de type voix et/ou données, et des informations de signalisation pour l'établissement et la gestion des appels. Selon un mode de réalisation préféré, concernant la voix, la passerelle selon l'invention comporte des moyens de transcodage d'informations de signalisation, du protocole de transmission numérique utilisé dans le premier terminal, vers un protocole de transmission numérique appelé RTP (Real-time Transport Protocol) utilisé pour les informations de type voix, dans le second terminal.

Selon un mode de réalisation préféré, concernant la voix, la passerelle selon l'invention comprend des moyens d'interconnexion compatibles avec le protocole de transmission numérique appelé RTP (Real-time Transport Protocol) utilisé pour les informations de type voix, dans le second terminal.

Selon un mode de réalisation particulier, la passerelle selon l'invention comprend en outre au moins un commutateur téléphonique privé, compatible IP, pour la gestion de la transmission de signaux numériques entre lesdits réseaux.

Selon un autre mode de réalisation particulier, la passerelle selon l'invention comprend en outre au moins un routeur fonctionnant sur des réseaux Internet, et une serveur d'appels traitant des protocoles de gestion de communication sur le protocole Internet pour la gestion de la transmission de signaux numériques selon ledit protocole Internet, entre lesdits réseaux.

Ledit réseau privé est de type réseau local informatique ou réseau privé à intégration de service.

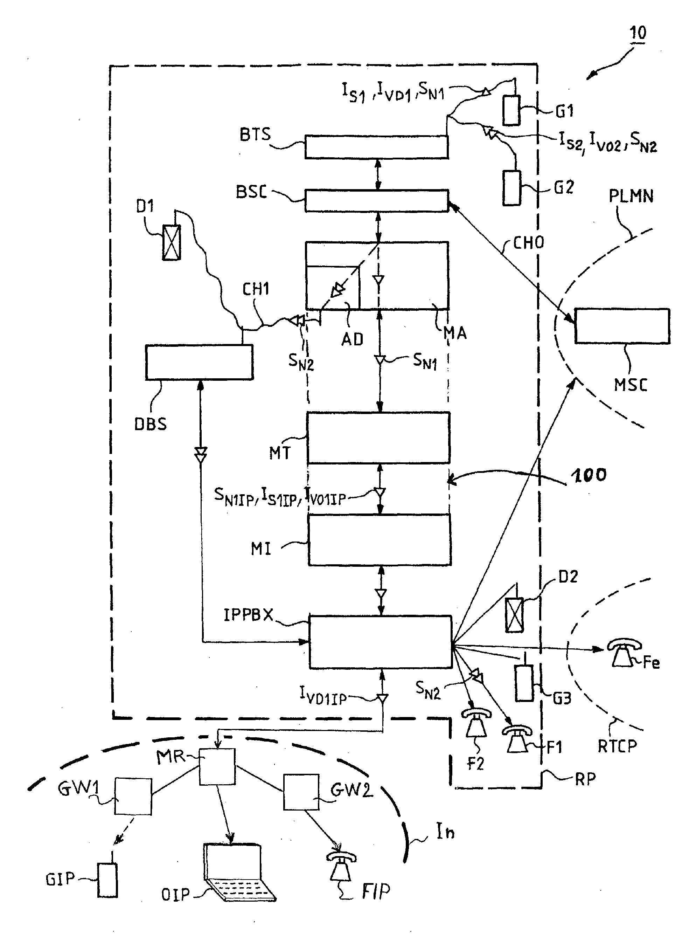

Les caractéristiques et objets de la présente invention ressortiront de la description détaillée donnée ci-après en regard de la figure annexée, présentée à titre illustratif et nullement limitatif.

La figure unique représente le schéma synoptique d'un exemple de réalisation 10 d'un système de transmission comportant une passerelle inter-réseaux selon l'invention, 100. Cette passerelle 100 relie un réseau privé RP à un réseau public de transmission de signaux numérique, référencé In, qui est le réseau Internet.

Le réseau privé de télécommunication RP est un réseau local informatique offrant un premier service de radiotéléphonie mobile, utilisant le protocole de transmission numérique GSM. Le réseau RP permet d'établir des liaisons avec une pluralité de stations mobiles GSM tels que des terminaux : G1, G2 et G3. En outre, le réseau privé RP offre un second service de radiotéléphonie mobile, utilisant le protocole de transmission numérique DECT, et comprend une pluralité de terminaux DECT : D1, D2. De plus, le réseau RP comprend des téléphones fixes F1, F2.

Le réseau public Internet In utilise le protocole de transmission numérique Internet appelé couramment IP. Ce réseau comprend des moyens de routage tels que le routeur MR, et divers terminaux :
- des terminaux, tels que l'ordinateur OIP (ou des téléphones dédiés au protocole Internet, non représentés), sont directement adressables chacun par une adresse Internet, et sont capables d'émettre et recevoir directement des informations de type voix selon le protocole RTP/IP, et/ou émettre et recevoir directement des informations de type données selon le protocole UDP/IP ou le protocole TCP/IP ;
- des terminaux, tels que le terminal téléphonique classique FIP et le terminal radiotéléphonique GIP, de type GSM, sont adaptés grâce à des passerelles classiques (respectivement GW1 et GW2) pour être adressables chacun par une adresse Internet, et pour être capables d'émettre et recevoir des informations de type voix selon le protocole RTP/IP, et/ou émettre et recevoir des informations de type données selon le protocole UDP/IP ou le protocole TCP/IP.

Afin de pouvoir émettre et recevoir des signaux de voix en temps réel et qui restent compatibles avec le protocole IP, le terminal OPI et les passerelles GW1, GW2 utilisent tous un protocole normalisé appelé RTP (Real-time Transport Protocol). Plus précisément les signaux de voix sont comprimés et codés selon l'un des procédés normalisés ITU G711, G723, G729a.

Le système 10 comporte en outre un ensemble de moyens de utilisés successivement pour la transmission des signaux numériques portant des communications téléphoniques et/ou des données d'un terminal GSM à un terminal connecté à Internet. Ces moyens sont principalement la passerelle inter-réseaux 100 qui comprend:
- des moyens MA d'aiguillage de signaux numériques, reliés à un adaptateur AD,
- des moyens MT de transcodage de signaux numériques, reliés aux moyens MA,
- et des moyens d'interconnexion Ml, compatibles avec le protocole IP, reliés aux moyens MT et à un commutateur téléphonique privé IPPBX supportant le protocole IP.

Considérons comme point de départ les terminaux GSM G1 et G2 pour décrire le chemin parcouru, ainsi que l'évolution de signaux numériques S_{N1}, S_{N2} respectivement émis par les terminaux G1, G2. Les signaux S_{N1}, S_{N2} contiennent des informations de signalisation I_{S1}, I_{S2} et des informations de type voix et/ou données I_{VD1}, I_{VD2}.

Comme dans l'art antérieur, chaque terminal G1, G2 est en liaison radio avec une station de base GSM, BTS, par des liaisons radio conformes au protocole de transmission GSM. Il communique ainsi avec un contrôleur de stations de base, BSC. Chaque signal S_{N1}, S_{N2} peut être dirigé par le contrôleur BSC, dans une première configuration, vers un chemin CH0 menant au réseau public PLMN, en conservant ainsi les services fournis par la norme GSM. Dans une deuxième configuration, chaque signal S_{N1}, S_{N2} est envoyé par le contrôleur BSC vers les moyens d'aiguillage MA. Ces derniers dirigent chacun de ces signaux S_{N1}, S_{N2} en fonction d' informations de signalisation qui leurs sont associées.

Dans cet exemple, pour le signal S_{N2}, les informations de signalisation I_{S2} lues par les moyens MA indiquent que la communication est de type locale. De manière analogue au système selon l'art antérieur, décrit précédemment, les moyens d'aiguillage MA selon l'invention alors dirigent le signal S_{N2} vers un adaptateur AD pour rendre compatible le protocole de signalisation GSM avec le protocole de signalisation propre au commutateur privé IPPBX. Ensuite le signal S_{N2} est envoyé, par le chemin CH1, vers une station de base DECT, référencée DBS, puis au commutateur IPPBX, qui est un autocommutateur téléphonique privé compatible IP. Le signal S_{N2} est alors dirigé par le commutateur IPPBX vers l'un des terminaux reliés à ce commutateur : D2, G3, F1, F2 du réseau privé ; ou vers un terminal fixe Fe extérieur au réseau privé, le commutateur téléphonique IPPBX étant relié à un réseau public fixe, RTCP.

Dans cet exemple, pour le signal S_{N1}, les informations de signalisation Iₛ₁ lues par les moyens MA indiquent que la communication est de type nationale ou internationale. Les moyens d'aiguillage MA dirigent alors le signal S_{N1} vers les moyens de transcodage MT. Ces derniers transcodent des informations de type voix et/ou données I_{VD1} et des informations de signalisation I_{S1} selon le protocole numérique GSM, en des informations de type voix et/ou données I_{VD1IP} et des informations de signalisation I_{S1IP} selon le protocole IP, et vice-versa, pour permettre un dialogue entre le réseau privé RP et le réseau Internet In. Le commutateur privé IPPBX est un commutateur compatible IP, c'est à dire satisfait aux normes de compatibilité Internet. Il est couplé au routeur MR du réseau Internet.

A titre d'exemples, les codeurs pour la voix employés dans un réseau GSM sont l'EFR (Enhanced Full speech Rate en anglais) ou l'AMR (Adaptative Multi-Rate) définis par l'ITU (International Telecommunication Union en anglais) ; alors que les codeurs dits IP utilisés pour les terminaux voix raccordés directement au réseau Internet sont les codeurs normalisés ITU G711, ou G723, ou G729a. Les moyens de transcodage MT choisissent le type de transcodage à effectuer en fonction des codeurs GSM et IP utilisés. Les moyens de transcodage MT traitent également, à titre d'exemple, les signaux de signalisation GSM tel que définis dans la recommandation 4.08 de l'ETSI (European Telecommunications Standard Institute) pour les transcoder en signaux de signalisation conformes à un protocole de signalisation IP, tel que H323 défini par l'IETF (Internet Engineering Task Force), ou encore SIP (Session Initialisation Protocole) défini par l'ITU.

Les moyens d'interconnexion MI sont constitués d'une passerelle IP assurant le passage du signal numérique S_{N1IP}, transcodé selon le protocole IP, vers le réseau Internet In. Par exemple, on peut employer une passerelle de téléphonie sur Internet, appelée passerelle VoIP (Voice over IP), qui permet d'intégrer les informations de type voix aux paquets transportés dans le réseau Internet In. Ces moyens MI sont associés à au moins au commutateur téléphonique privé IPPBX supportant le protocole IP pour la gestion de la transmission du signal S_{1IP}.

Les moyens de routage MR acheminent des informations de type voix et/ou données I_{VD1IP} par commutation de paquets RTP (Real-time Transport Protocol), vers la passerelle GW1 par exemple. Cette passerelle GW1 adapte le terminal GSM GIP au réseau Internet en changeant le format des signaux dans les deux sens de transmission.

La passerelle GW2 adapte le terminal téléphonique classique FIP au réseau Internet en changeant le format des signaux dans les deux sens de transmission.

Les informations I_{VD1IP} peuvent être reçues directement par l'ordinateur OIP.

Il est à remarquer que, malgré le système de transmission 10, un terminal GSM tel que G1, G2, G3 peut recevoir classiquement des communications de l'extérieur du réseau RP.

Bien entendu, la description qui précède a été donnée à titre purement illustratif. On pourra sans sortir du cadre de l'invention remplacer tout moyen par un moyen équivalent. En particulier, il est possible de munir chaque terminal GSM du réseau privé d'un émetteur-récepteur Bluetooth, et de munir le réseau privé de stations de base Bluetooth, pour utiliser des liaisons radio Bluetooth au lieu des liaisons radio GSM lorsque les terminaux GSM sont dans la zone de couverture du réseau privé. Les signaux de voix/données sont transmis alors selon le format dit GSM 7.07 par exemple, dans les terminaux GSM/Bluetooth. Par ailleurs, le service de radiotéléphonie mobile peut aussi bien être de type PCS, UMTS, ou CDMA.

Dans un mode de réalisation particulier du système 10, pour le cas où il n'y aurait pas besoin de connecter des terminaux classiques F1, F2, ... (non compatibles IP), le commutateur IPPBX serait supprimé et la passerelle 100 comprendrait en outre au moins un routeur de type IP permettant le routage d'éléments de données identifiés du réseau Internet In ; et un serveur d'appels, associé à ce routeur, et capable de gérer les protocoles d'établissement d'appel standardisés utilisés dans les réseaux Internet tels que le protocole H323 défini par l'IETF (Internet Engineering Task Force) ou encore SIP (Session Initialisation Protocole) défini par l'ITU.

## Revendications

1. Passerelle inter-réseaux (100) permettant d'établir une communication entre un premier terminal radiotéléphonique (G1) de type GSM, ou UMTS, ou PCS, ou Bluetooth, connecté à un réseau de télécommunication privé (RP), et un autre terminal (GIP, OIP, FIP) appartenant à un autre réseau, cet autre terminal étant adressable par une adresse Internet et étant adapté pour émettre et recevoir des informations de type voix selon le protocole RTP/IP, et/ou pour émettre et recevoir des informations de type données selon le protocole UDP/IP ou le protocole TCP/IP ;
**caractérisée en ce qu'**elle comporte des moyens (MT) de transcodage d'informations, du protocole de transmission numérique utilisé dans le premier terminal, vers le protocole utilisé dans le second terminal, et vice versa.

2. Passerelle inter-réseaux (100) selon la revendication 1, **caractérisée en ce qu'**elle comporte des moyens (MT) de transcodage d'informations de signalisation, du protocole de transmission numérique utilisé dans le premier terminal, vers le protocole de transmission numérique appelé RTP (Real-time Transport Protocol) utilisé pour les informations de type voix, dans le second terminal.

3. Passerelle inter-réseaux (100) selon la revendication 1, **caractérisée en ce qu'**elle comprend des moyens d'interconnexion (Ml) compatibles avec le protocole de transmission numérique appelé RTP (Real-time Transport Protocol) utilisé pour les informations de type voix, dans le second terminal.

4. Passerelle inter-réseaux (100) selon la revendication 1, **caractérisée en ce qu'**elle comprend en outre au moins un commutateur téléphonique privé (IPPBX), compatible IP, pour la gestion de la transmission de signaux numériques entre lesdits réseaux (RP, In).

5. Passerelle inter-réseaux (100) selon la revendication 1, **caractérisée en ce qu'**elle comprend en outre au moins un routeur fonctionnant sur des réseaux Internet, et une serveur d'appels traitant des protocoles de gestion de communication sur le protocole Internet pour la gestion de la transmission de signaux numériques (I_{VD1IP}) selon ledit protocole Internet, entre lesdits réseaux (RP, In).

6. Passerelle inter-réseaux (100) selon la revendication 1, **caractérisée en ce que** ledit réseau privé (RP) est de type réseau local informatique ou réseau privé à intégration de service.
